# EUROPÄISCHE PATENTSCHRIFT

(11) **EP 3 672 039 B1**
(45) Veröffentlichungstag und Bekanntmachung des Hinweises auf die Patenterteilung: **27.04.2022**
(21) Anmeldenummer: 19193362.1
(22) Anmeldetag: 23.08.2019
(51) Int. Cl.: H02K 16/02, F16K 11/12, F16K 11/18, F16K 11/20, F16K 31/04, F01P 3/20, F01P 7/16

(54) **STELLANTRIEB FÜR EIN STELLORGAN ZUR STEUERUNG EINES FLUIDES**
POSITIONING DRIVE FOR AN ACTUATOR FOR CONTROLLING A FLUID
SERVOMOTEUR POUR UN ORGANE DE RÉGLAGE PERMETTANT DE COMMANDER UN FLUIDE

(30) Priorität: 18.12.2018 DE 102018132592
(43) Veröffentlichungstag der Anmeldung: 24.06.2020
(73) Patentinhaber: Handtmann Systemtechnik GmbH & Co. KG, 88400 Biberach/Riß (DE)
(72) Erfinder: Coelsch, Stefan, 88400 Biberach (DE); Ströbele, Hans Jürgen, 89155 Erbach (DE)
(74) Vertreter: Otten, Roth, Dobler & Partner mbB Patentanwälte

(56) Entgegenhaltungen:
- WO-A1-99/39426
- WO-A1-2013/056458
- WO-A1-2016/022369
- JP-A- 2009 303 393
- JP-B2- 5 223 475

## Beschreibung

Die Erfindung betrifft einen Stellantrieb für ein Stellorgan zur Steuerung eines Fluides, insb. eines Kühlmittels eines Fahrzeugs, wobei wenigstens ein erster, elektrischer Antriebsmotor zumindest eine erste, um eine erste Drehachse drehbare Rotoreinheit und eine erste, zumindest zwei erste Antriebsspulen umfassende Statoreinheit aufweist, nach dem Oberbegriff des Anspruchs 1.

### Stand der Technik

Moderne Fahrzeugmotoren, insb. Verbrennungskraftmaschinen wie z.B. Viertaktmotoren, oder Elektromotoren insb. auch mit Brennstoffzellen zusammen, in Fahrzeugen wie PKWs oder LKWs werden bis auf wenige Ausnahmen flüssigkeitsgekühlt bzw. mit Wasser temperiert/erwärmt, wobei in der Regel ein Gemisch aus Wasser und einem Frost- und Korrosionsschutzmittel als Kühlflüssigkeit als sog. Kühlwasser dient.

Ein Wasser- bzw. Kühlmittelkühler, der sog. "Kühler", bzw. Wärmetauscher ist meist an der Front des Fahrzeuges angebracht, wo ein Luftstrom das durchfließende Kühlmittel abkühlt. Von dort wird das Kühlmittel mit einer Kühlmittelpumpe über Schläuche durch den Motor gepumpt (Zylinderkopf und Motorblock). Thermisch stark beanspruchte Anbauteile des Motors wie Abgasturbolader, Generator oder der Abgasrückführkühler können mit in den Kühlmittelkreislauf eingebunden sein. In modernen Motoren werden häufig elektrische Kühlmittelpumpen (Leistung ~ 200 W) mit regelbarer Förderleistung eingesetzt. Sie haben eine wesentlich geringere Leistungsaufnahme als mechanisch angetriebenen Pumpen und ermöglichen dadurch einen geringeren Kraftstoffverbrauch.

Der Kühlkreislauf, und damit die Motortemperatur, wird u.a. durch ein Stellorgan geregelt, früher üblicherweise ein Thermostat, das heute zum Teil bereits durch ein Drehschieber ersetzt wird. Letzteres ist aktiv regelbar, insb. über die Fahrzeugelektronik bzw. einen Elektromotorantrieb.

Solange der Motor nicht seine Betriebstemperatur erreicht hat, ist das Stellorgan/Thermostatventil geschlossen, und die Kühlflüssigkeit zirkuliert meist nur über Motor, Wasserpumpe und Heizungswärmeübertrager. Öffnet das Stellorgan bzw. der Thermostat, so wird der Haupt-Wasserkühler mit in den Kreislauf eingeschlossen, und die eigentliche Kühlung setzt ein. Das Stellorgan/Thermostatventil öffnet je nach Fahrzeug und Motor üblicherweise zwischen ca. 75°C und ca. 88°C. Es gibt mittlerweile zunehmend auch Motoren mit mehreren Kreisläufen, die unterschiedlichste Temperaturen aufweisen, und auch kennfeldgesteuerte elektrische Stellorgane bzw. Thermostate.

Da sich die Kühlflüssigkeit bei Erwärmung ausdehnt, steigt der Druck im Kühlsystem. Um diesen Effekt auszugleichen, ist ein Ausgleichsbehälter/Ausdehnungsgefäß in den Kühlkreislauf integriert, der das überschüssige Kühlmittel aufnimmt und bei Bedarf wieder abgibt. Durch das Erhöhen des Systemdruckes steigt gleichzeitig der Siedepunkt des Kühlmittels.

Das zuvor genannte Motorkühlsystem ist nicht immer das einzige Kühlsystem in einem Motor bzw. Fahrzeug. Zusätzlich können noch separate Systeme z.B. für die Ladeluft, das Motoröl, das Getriebeöl, das Lenkgetriebeöl und/oder den Kraftstoff eingebaut sein. Bei Hybridfahrzeugen existiert meist ein weiteres Kühlsystem zur Kühlung von Elektromotoren/Generatoren und deren Leistungselektronik, z.B. Inverter, Umrichter, etc..

Oft sind die Pumpe und das Stellorgan in einem gemeinsamen Gehäuse untergebracht und direkt am Motor, insb. Zylinderkopf, fixiert, wobei üblicherweise der Zylinderkopf das Gegenstück bzw. das zweite Gehäuseelement zu einem Kühlmittelgehäuseelement bildet und der Antrieb der Kühlmittelpumpe über den Motor bzw. die Nockenwelle mit Zahnriemen erfolgt. Auch sind vom Motor separate Pumpgehäuse im Einsatz, wobei meist ein separater Elektromotor als Antrieb der Kühlmittelpumpe verwendet wird.

Diese Baueinheit, ob separat oder direkt an den Motor/Zylinderkopf angeflanscht, wird auch als sog. Kühlmittelregeleinheit oder Kühlmittelverteilermodul bezeichnet und weist als zentrale Komponenten die Kühlmittelpumpe sowie das Stellorgan auf, insb. Drehschieber oder einen oder zwei Thermostate. Zur Verteilung bzw. Steuerung/Regelung der o.g. verschiedensten Kühlmittelströme bzw. Teilkreisläufe sind diverse Kühlkanäle und Anschlüsse bzw. Öffnungen für das Kühlwasser/-mittel integriert. Als Material wird vielfach Metall, insb. Aluminium, oder Kunststoff, insb. sog. Hochleistungskunststoffe, eingesetzt.

Es ist jedoch von Nachteil, dass die unterschiedlichsten Kühlmittelströme bzw. Teilkreisläufe und diverse Kühlkanäle sowie Anschlüsse bzw. Öffnungen bislang nur bedingt separat regelbar sind oder nur mit einem sehr großen konstruktiven Aufwand. So sind z.B. zwei Thermostate einerseits aufwändig bei der Herstellung des Moduls und benötigen relativ viel Platz.

Andererseits sind diese Thermostate nicht aktiv regelbar und somit nicht an unterschiedlichste Betriebsbedingungen des Verbrennungsmotors bzw. Fahrzeug exakt/flexibel anpassbar.

Auch besteht im Laufe des (langjährigen) Betriebs die Gefahr der Undichtigkeit durch die diversen Anschlussstellen der Thermostate bzw. Stellorgane und/oder Durchbrüche für die außen am Modul angeordneten Antreibe für den Drehschieber bzw. das Stellorgan oder die Pumpe etc..

Als Stellantrieb für einen derartigen Drehschieber bzw. das Stellorgan wird u.a. ein Elektromotor mit Rotor und Stator verwendet. Dieser Elektromotor wird elektrisch bzw. elektronisch gesteuert und damit auch das Stellorgan. Üblicherweise wird eine Platine bzw. elektrische und/oder elektronische Leiterplatte mit dieser Steuer- bzw. Kontrolleinheit bestückt bzw. ausgestattet.

Darüber hinaus ist aus der WO 2016/022 369 A1 ein Wärmemanagement-Ventilmodul mit zwei, motorisch angetriebenen Stellelementen bekannt.

Zudem sind aus den Druckschriften JP 2009 303 393 A, JP 5 223 475 A, WO 2013/056 458 A1 und WO 99/39 426 A1 unterschiedlichste Elektromotoren bereits bekannt.

### Aufgabe und Vorteile der Erfindung

Aufgabe der Erfindung ist es demgegenüber, einen Stellantrieb für ein Stellorgan zur Steuerung eines Fluides, insb. eines Kühlmittels bzw. flüssigen Wärmeträgers eines Fahrzeugs, der eingangs genannten Art vorzuschlagen, der neue und/oder zusätzliche Funktionalitäten realisieren und/oder platzsparend umgesetzt werden kann und der insbesondere wirtschaftlich günstig herstellbar ist.

Diese Aufgabe wird, ausgehend von einem Stellantrieb der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich ein erfindungsgemäßer Stellantrieb dadurch aus, dass eine elektrische und/oder elektronische Leiterplatte wenigstens eine elektrische und/oder elektronische Kontrolleinheit zum Kontrollieren des ersten Antriebsmotors umfasst, dass wenigstens auf einer ersten Seite einer Trägerplatte zumindest die zwei ersten Antriebsspulen der ersten Statoreinheit und auf einer zweiten, der ersten Seite der Trägerplatte gegenüberliegend angeordneten, zweiten Seite der Trägerplatte zumindest zwei zweite Antriebsspulen einer zweiten Statoreinheit eines zweiten elektrischen Antriebsmotors angeordnet sind, wobei der zweite elektrische Antriebsmotor die zweite Statoreinheit und eine zweite Rotoreinheit umfasst, und dass wenigstens eine erste Antriebswelle des ersten elektrischen Antriebsmotors wenigstens teilweise als erste Hohlwelle und/oder wenigstens eine zweite Antriebswelle des zweiten elektrischen Antriebsmotors wenigstens teilweise als zweite Hohlwelle ausgebildet ist/sind, wobei eine Antriebsachse als Lagerelement der ersten und/oder zweiten Hohlwelle ausgebildet ist, so dass die erste und/oder zweite Hohlwelle um die Antriebsachse drehbar ist/sind.

Mit Hilfe dieser Maßnahme wird erreicht, dass der Stellantrieb besonders platzsparend bzw. relativ klein ausgeführt werden kann und zudem noch neue bzw. erweitere Funktionalitäten realisiert werden können. So können mit den zwei elektrischen Antriebsmotoren zwei separate Funktionalitäten bzw. Betätigungen von zwei Stellgliedern verwirklicht werden. Hiermit ergeben sich neue und erweitere Möglichkeiten bei der Steuerung des Fluides, insb. in Bezug auf die Steuerung eines flüssigen Wärmeträgers bzw. des Kühlmittels eines Fahrzeugmotors wie Verbrennungsmotor oder Elektromotor mit diversen Motorkomponenten und/oder der Akkumulatoren für einen Elektromotorantrieb und/oder einer Brennstoffzelle für den Elektromotorantrieb.

Beispielsweise können die beiden Antriebsmotoren unabhängig voneinander betrieben werden. Drehzahl, Drehmoment und/oder Drehrichtung und auch die gemäß der Erfindung individuell abgestimmt und/oder angesteuert bzw. kontrolliert werden. Zudem wird/werden mittels der Erfindung die erste und/oder zweite Rotoreinheit in vorteilhafter Weise gelagert, z.B. mittels Gleitlagerung, bzw. positioniert und insbesondere konzentrisch zueinander ausgerichtet. Dies verbessert die Laufruhe bzw. auch die Konzentrizität der beiden Antriebsmotoren.

Vorzugsweise weist/weisen der/die erste und/oder zweite Rotoreinheit (jeweils) mehrere Permanentmagnete auf, insb. Magnete mit sog. Seltenen Erden. Hierdurch kann eine besonders kompakte und/oder vergleichsweise leistungsstarke Bauweise des Stellantriebs verwirklicht werden. Auch wird der Aufwand für die Ansteuerung bzw. den Betrieb durch die Verwendung von Permanentmagneten minimiert.

Vorteilhafterweise ist die Trägerplatte als Spulenkern, insbesondere Ferritkern, der ersten Antriebsspulen und/oder der zweiten Antriebsspulen ausgebildet. Hiermit kann eine Doppelfunktion, nämlich eine Träger- und eine magnetische Funktion, realisiert werden, was den konstruktiven und wirtschaftlichen Aufwand reduziert.

Beispielsweise ist der Spulenkern als Sinterkern verwirklicht. Das bedeutet, dass der Spulenkern aus Sintermaterial hergestellt ist. Hiermit können nahezu beliebige Formen, insb. auch komplexe Geometrien ohne großen Aufwand kostengünstig hergestellt werden. So kann die Trägerplatte in vorteilhafter Weise alle Spulenkerne der ersten und/oder zweiten Antriebsspulen umfassen. Hierdurch ist eine einstückige Baueinheit als Trägerplatte mit Spulenkernen realisierbar.

In einer vorteilhaften Variante der Erfindung weist die Trägerplatte einen Schichtaufbau bzw. wenigstens zwei Trägerschichten auf. Beispielsweise umfasst eine erste Trägerschicht wenigstens die ersten Antriebsspulen und/oder eine zweite Trägerschicht umfasst die zweiten Antriebsspulen. So können die Trägerschichten in vorteilhafter Weise miteinander verbunden/fixiert, insb. verklebt oder verlötet, werden. Auch kann eine Zwischenschicht, insb. eine Abschirmung bzw. eine Abschirmschicht oder dergleichen, vorgesehen werden und insb. zwischen den wenigstens zwei bzw. der ersten und der zweiten Trägerschicht/en angeordnet werden.

Vorteilhafterweise ist die Leiterplatte als die Trägerplatte ausgebildet und/oder umfasst die Trägerplatte die Leiterplatte. Hiermit kann die Leiterplatte eine Doppelfunktion verwirklichen, was den Aufwand wesentlich reduziert. Zum Beispiel können Spulenkerne der ersten und/oder zweiten Antriebsspulen, insb. als Sinterkerne verwirklicht, auf der Leiterplatte/Platine montiert bzw. fixiert werden. So können die ersten und/oder zweiten Antriebsspulen mit den jeweiligen Spulenkernen als einstückige erste und/oder zweite Montageeinheit auf der jeweiligen Seite der Leiterplatte/Platine befestigt bzw. elektrisch angeschlossen werden. Dies reduziert den Herstellungsaufwand.

Beispielsweise wird die Leiterplatte/Platine mit den ersten und/oder zweiten Antriebsspulen und/oder deren Spulenkernen bestückt. Dies kann wirtschaftlich günstig verwirklicht werden und ist zudem sehr platzsparend.

Vorteilhafterweise ist die Kontrolleinheit und/oder die ersten Antriebsspulen und/oder die zweiten Antriebsspulen und/oder Spulenkerne der Antriebsspulen und/oder erste Trägerschicht und/oder zweite Trägerschicht als Bestückung der Leiterplatte/Platine ausgebildet. So sind diese vorgenannten Bauteile entsprechend einzeln oder im Verbund auf/mit der Leiterplatte bzw. der Trägerplatte fest verbunden und/oder verdrahtet bzw. verlötet. Hierdurch können diese Bauteile mit bereits vorhandenen Fertigungsverfahren montiert werden, was besonders wirtschaftlich günstig ist. Die ersten und/oder zweiten Antriebsspulen können mit oder ohne (Ferrit-)Kerne bzw. Spulenkerne in vorteilhafter Weise jeweils als Einzelspulen oder als sog. kombinierte Kerne oder auch als auf die Leiterplatte gedruckte Spulen/Schaltungen ausgebildet werden.

Generell ist von Vorteil, die ersten Antriebsspulen gemeinsam bzw. konzentrisch um die erste Drehachse und die zweiten Antriebsspulen gemeinsam bzw. konzentrisch um eine zweite Drehachse anzuordnen.

In einer besonderen Weiterbildung der Erfindung ist die erste Drehachse der ersten Rotoreinheit zugleich eine zweite Drehachse der zweiten Rotoreinheit, so dass der erste elektrische Antriebsmotor konzentrisch zum zweiten elektrischen Antriebsmotor angeordnet ist. Hiermit wird der Stellantrieb noch kompakter bzw. platzsparender. Zudem kann in vorteilhafter Weise eine (gemeinsame/einzige) Ausnehmung/Durchbruch bzw. ein Loch in der Leiterplatte als Durchgang/Durchlass für eine Antriebswelle oder Antriebsachse des/der beiden Antriebsmotoren verwendet werden. Gegebenenfalls kann mit dieser Maßnahme auch eine vorteilhafte Fixierung und/oder Positionierung der beiden Rotoreinheiten bzw. der Antriebswellen oder Antriebsachsen erreicht werden.

Vorteilhafterweise ist wenigstens eine Abschirmeinheit zum elektromagnetischen Abschirmen des/der ersten Antriebsmotors/Statoreinheit von dem/der zweiten Antriebsmotor/Statoreinheit vorgesehen. Diese Maßnahme verbessert den unabhängigen bzw. individuellen Betrieb der beiden Antriebsmotoren, da diese sich durch die Abschirmung nicht bzw. nur sehr wenig gegenseitig beeinflussen können.

Gegebenenfalls kann eine unterschiedliche Bestromung der Antriebsspulen als Abschirmung bzw. Kompensation der beiden Statoreinheiten/Antriebsmotoren vorgesehen werden, so dass die gegenseitige Beeinflussung reduziert bzw. minimiert wird.

Vorzugsweise umfasst die Leiterplatte wenigsten ein Abschirmelement der Abschirmeinheit. Beispielsweise ist das Abschirmelement als Kurzschlussblech, Metallfolie oder dergleichen ausgebildet. Beispielsweise weist die Leiterplatte einen Schichtaufbau auf, wobei wenigstens ein Abschirmelement als Abschirmschicht in/auf der Leiterplatte angeordnet ist/sind.

Auch kann die gegenseitige Beeinflussung dadurch reduziert bzw. minimiert werden, dass in vorteilhafter Weise die Anzahl der ersten Antriebsspulen nicht gleich der Anzahl der zweiten Antriebsspulen ist und/oder dass in radialer Richtung um die Drehachse betrachtet die ersten Antriebsspulen wenigstens teilweise versetzt zu den zweiten Antriebsspulen angeordnet sind. Beispielsweise sind in radialer Richtung um die Drehachse betrachtet die ersten Antriebsspulen wenigstens in einem ersten Kreisbogensegment/-sektor und die zweiten Antriebsspulen in einem in Bezug auf das erste Kreissektor versetzt angeordneten, zweiten Kreisbogensegment/-sektor angeordnet sind.

Gegebenenfalls sind die Spulen der beiden Motoren in radialer Richtung betrachtet jeweils auf unterschiedlichen Hälften angeordnet.

Vorteilhafterweise ist ein erster Abstand der ersten Antriebsspulen in radialer Richtung zur Drehachse betrachtet nicht gleich einem zweiten Abstand der zweiten Antriebsspulen und/oder ist ein erster, auf die erste Drehachse bezogener Außendurchmesser der ersten Antriebsspulen nicht gleich einem zweiten, auf die zweite Drehachse bezogener Außendurchmesser der zweiten Antriebsspulen. Das bedeutet, dass die Antriebsspulen der beiden Motoren unterschiedlich groß ausgeführt werden können, um v.a. ein gegenseitiges Beeinflussen zu reduzieren. Hierbei können auch unterschiedliche Drehmomente bzw. Leistungen der beiden Motoren verwirklicht werden, womit unterschiedliche Stellglieder betätig bzw. beaufschlagt werden können.

Auch können auch unterschiedliche Lasten, die unterschiedliche Stellglieder generieren, zu einer Reduzierung der gegenseitigen Beeinflussung der beiden Antriebsmotoren führen.

Vorteilhafterweise sind wenigstens ein erstes Betätigungselement zum Betätigen eines ersten Stellgliedes und ein zweites Betätigungselement zum Betätigen eines zweiten Stellgliedes vorgesehen, wobei das erste Betätigungselement zwischen dem ersten Antriebsmotor und dem ersten Stellglied angeordnet und das zweite Betätigungselement zwischen dem zweiten Antriebsmotor und dem zweiten Stellglied angeordnet sind.

Vorzugsweise ist das erste Betätigungselement wenigstens teilweise als Hohlwelle und/oder das erste Betätigungselement wenigstens teilweise als Welle ausgebildet ist/sind, wobei die Welle als Lagerelement der Hohlwelle ausgebildet ist, so dass die Hohlwelle um die Welle drehbar ist.

Vorteilhafterweise umfasst das Stellorgan wenigstens ein erstes Stellglied und ein zweites Stellglied, wobei insbesondere ein erstes Betätigungselement zum Betätigen des ersten Stellglieds konzentrisch zu einem zweiten Betätigungselement zum Betätigen des zweiten Stellglieds angeordnet ist, so dass das erste Betätigungselement und das zweite Betätigungselement eine gemeinsame Längsachse und/oder Drehachse aufweisen. Mit Hilfe dieser Maßnahme wird erreicht, dass die Motorkühleinheit besonders platzsparend bzw. relativ klein ausgeführt werden kann und zudem noch neue bzw. erweitere Funktionalitäten realisiert werden können.

So können mit den zwei Stellgliedern des Stellorgans mindestens zwei separate Funktionalitäten bzw. Kühlfunktionen verwirklicht werden. Hiermit ergeben sich neue und erweitere Möglichkeiten bei der Steuerung des Kühlfluides, insb. in Bezug auf die Steuerung des Kühlmittels eines Fahrzeugmotors mit diversen Motorkomponenten. Dementsprechend können unterschiedliche Komponenten unterschiedlich gekühlt werden und somit unterschiedliche Betriebstemperaturen aufweisen. Beim Einsatz für ein Verbrennungsmotor, insbesondere in einem Fahrzeug, kann in vorteilhafter Weise das Motoröl weniger wie andere Komponenten des Motors gekühlt werden, so dass das Motoröl etwas wärmer und somit dünnflüssiger ist. Hierdurch kann der Motor leichter laufen und somit kann Energie gespart werden.

Beispielsweise können die beiden Stellglieder unabhängig voneinander betrieben werden. Durchflussmengen und/oder Öffnungsquerschnitte des jeweiligen Kanals können gemäß der Erfindung individuell und betriebsabhängig eingestellt und/oder verändert bzw. kontrolliert werden. Entsprechend können neue Betriebsbedingungen verwirklicht werden.

Darüber hinaus ist lediglich ein gemeinsamer Durchgang bzw. Ausnehmung in der Motorkühleinheit notwendig, um die beiden Stellglieder zu betätigen bzw. anzutreiben. Hiermit reduziert sich der konstruktive als auch der dichtungstechnische und somit der wirtschaftliche Aufwand. Dies minimiert auch die Gefahr bzgl. dem Auftreten von Undichtigkeiten im Laufe des langjährigen Betriebs.

Beispielsweise kann/können das/die erste und/oder zweite Stellglied längs der Längsachse verstellt bzw. verschoben werden. Vorteilhafterweise ist/sind das erste Betätigungselement und/oder das zweite Betätigungselement drehbar um die Drehachse. Die Abdichtung und somit die Zuverlässigkeit des Durchgangs der Betätigung des Stellorgans durch das Gehäuse der Motorkühleinheit hindurch ist bei einer rotatorischen Verstellung des/der Stellglieder wesentlich vereinfacht bzw. verbessert.

Vorteilhafterweise ist wenigstens eine (erste und/oder zweite) Getriebevorrichtung zum Übersetzen/Untersetzen des ersten und/oder zweiten Antriebsmotors vorgesehen. So sind in vorteilhafter Weise die erste Getriebevorrichtung zwischen dem ersten Antriebsmotor und dem ersten Stellglied/Betätigungselement und die zweite Getriebevorrichtung zwischen dem zweiten Antriebsmotor und dem zweiten Stellglied/Betätigungselement anzuordnen. Hiermit können z.B. unterschiedliche Drehzahlen und/oder Drehmomente bzw. eine vorteilhafte Anpassung dieser Parameter an das jeweilige Stellglied bzw. Antriebsmotor verwirklicht werden.

### Ausführungsbeispiel

Ein bevorzugtes Ausführungsbeispiel der Erfindung ist in der Zeichnung dargestellt und wird anhand der Figuren nachfolgend näher erläutert.

Im Einzelnen zeigt:
- Figur 1: schematisch ein Motorkühlsystem eines Fahrzeugs mit einem Stellantrieb gemäß der Erfindung,
- Figur 2: eine schematische Explosionsdarstellung eines ersten Stellantriebs gemäß der Erfindung,
- Figur 3: eine schematische, teilweise geschnittene, perspektivische Darstellung eines zweiten Stellantriebs gemäß der Erfindung,
- Figur 4: eine schematische, teilweise geschnittene, perspektivische Darstellung eines dritten Stellantriebs gemäß der Erfindung,
- Figur 5: eine schematische, teilweise geschnittene, perspektivische Darstellung eines vierten Stellantriebs gemäß der Erfindung,
- Figur 6: eine schematische, teilweise geschnittene, perspektivische Darstellung eines fünften Stellantriebs gemäß der Erfindung und
- Figur 7: eine schematische, teilweise geschnittene, perspektivische Darstellung eines sechsten Stellantriebs gemäß der Erfindung.

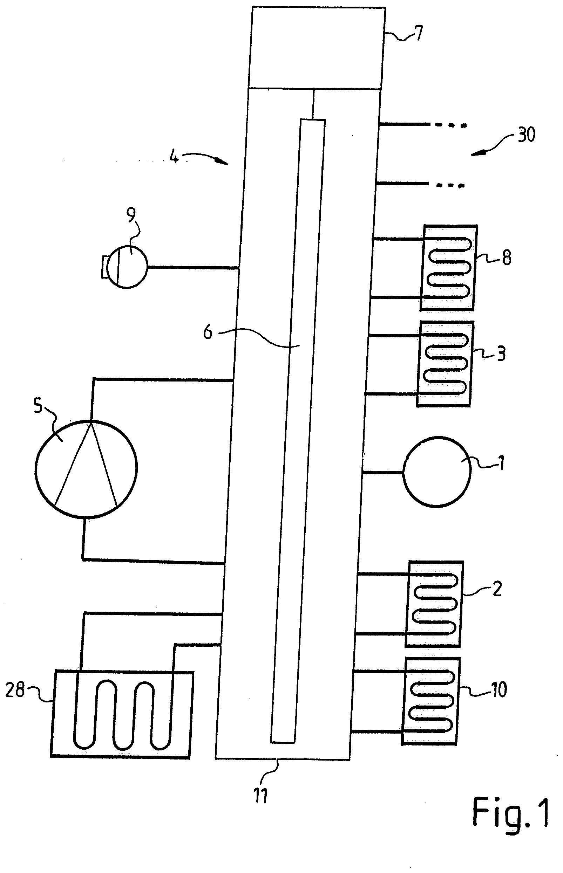

In Figur 1 ist eine Verteilereinheit/-modul 4 mit einigen Komponenten eines Wärme- bzw. Kühlsystems eines Fahrzeugs schematisch dargestellt. So wird ein Motor 1, insb. Verbrennungsmotor oder Elektromotor, mittels Kühlwasser gekühlt. Es kann eine Ölkühlung mittels einem Motorölkühler 2 und einem Getriebeölkühler 3 vorgesehen werden.

An einem nicht näher dargestellten Motorblock bzw. an einem Zylinderkopf ist das Verteilermodul 4 angeordnet bzw. angeflanscht und eine Kühlmittelpumpe 5 wird z.B. über den Motor 1 bzw. dessen Nockenwelle und Riemen oder dergleichen angetrieben. In diesem kann entgegen der in Figur 1 dargestellten Variante auch die Kühlmittelpumpe 5 integriert werden.

Das Verteilermodul 4 umfasst ein in Figur 1 sehr schematisch dargestelltes Stellorgan 6, insb. ein Drehschieber 6 oder dergleichen ist. Das Stellorgan 6 wird mittels einem Stellantrieb 7, insb. einem Elektromotor 7, der mittels einer Kontrolleinheit und wenigstens teilweise in Verbindung mit einer sog. "Boardelektronik" kontrolliert bzw. gesteuert. Hiermit kann eine vorteilhafte kennliniengesteuerte Regelung des Kühlsystems verwirklicht werden. Diverse Sensoren, insb. Temperatursensoren, Drucksensoren oder dergleichen unterstützen die Steuerung.

Die Kühlmittelpumpe 5 pumpt das Kühlwasser in den vorhandenen Kühlkreisläufen u.a. zwischen einem sog. Kühler 28 bzw. einem Hauptwärmetauscher 28 und einem Ausgleichsbehälter 9 sowie der Motorkühlung/Ölkühlung 2 sowie einem Heizungswärmetauscher 10 und ggf. weiteren Komponenten 30 hindurch.

Darüber hinaus kann auch im Fall einer Aufladung des Abgases bzw. einer Turbo-/Kompressorladung auch ein Abgaswärmetauscher 8 bzw. ein Ladeluftkühler oder weitere Komponenten 30 vorgesehen/eingebunden werden.

Im Fall eines Fahrzeugantriebs mit Elektromotor 1 und Akkumulator/Traktionsbatterie sowie ggf. einer Brennstoffzelle zur Stromerzeugung kann auch der Elektromotor 1 z.B. auf eine optimale Betriebstemperatur und die Batterie auf eine andere Betriebstemperatur sowie die Brennstoffzelle auf eine höhere Betriebstemperatur temperiert bzw. gekühlt werden.

In Figur 1 wird deutlich, dass der gesamte Kühlkreislauf somit mehrere Teilkreisläufe umfasst, die unterschiedliche Temperaturen/Temperaturniveaus aufweisen und die im Wesentlichen mittels dem Verteilergehäusemodul 4 bzw. Pumpe 5 und Stellorgan 6 gesteuert/kontrolliert/verteilt werden. Das bedeutet, dass die unterschiedlichen Betriebstemperaturen mittels des Moduls 4 bzw. des Stellorgans 6 durch vorteilhafte Fluidkontrolle/-steuerung realisiert werden.

Das Verteilergehäusemodul 4 kann separat vom Motor 1 angeordnet werden, wobei dieses dann vorzugsweise zwei Gehäuseelemente und den Elektroantrieb 7 als erfindungsgemäßen Stellantrieb 7 umfasst.

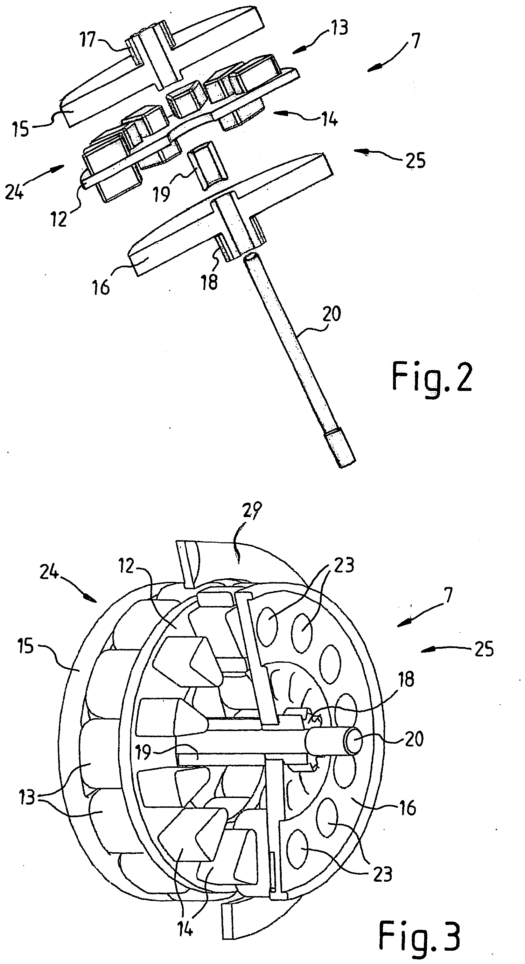

Figur 2 verdeutlicht eine Variante des Stellantriebs 7 gemäß der Erfindung, wobei erste Spulen 13 und zweite Spulen 14 auf zwei gegenüberliegenden Seiten einer Trägerplatte 12 angeordnet sind. Bei dieser Variante der Erfindung ist die Trägerplatte 12 zugleich als Leiterplatte 29 bzw. Platine 29 ausgebildet.

Der Stellantrieb 7 gemäß Figur 2 weist eine unterschiedliche Anzahl an ersten Spulen 13 und zweiten Spulen 14 auf, d.h. hier sind weniger zweite Spulen 14 als erste Spulen 13 vorhanden. So weist z.B. bei gleicher oder vergleichbarer Bestromung ein erster Motor 24 ein größeres Drehmoment und/oder eine größere Leistung und/oder eine größere Drehgeschwindigkeit als ein zweiter Motor 24 des Stellantriebes 7 auf. Hierdurch können z.B. zwei unterschiedliche Stellglieder in vorteilhafter Weise betreiben werden, wobei das Stellorgan 6 gemäß Figur 1 in vorteilhafter Weise zwei Stellglieder umfasst, die einerseits vom ersten Motor 13 und andererseits vom zweiten Motor 14 separat bzw. (im Wesentlichen) unabhängig angetrieben bzw. betätigt werden können.

Bei der o.g. Variante sind auf der Leiterplatte 29 bzw. Platine 29, d.h. hier auf der Trägerplatte 12 gemäß der Erfindung, direkt die Spulen 13, 14 bzw. in deren Innern nicht näher dargestellte Spulenkerne der Spulen 13, 14 montiert/fixiert.

Grundsätzlich umfasst gemäß der Erfindung ein erster Motor 24 im Wesentlichen die Trägerplatte 12 bzw. die Platine 29, die ersten Spulen 13, ein erster Rotor 15, Magnete 23, insb. Permanentmagnete 23, und vorzugsweise ein Zahnrad/Antriebsrad 17 bzw. eine Antriebswelle 17. Entsprechend umfasst ein zweiter Motor 14 im Wesentlichen die Trägerplatte 12 bzw. Platine 29, die zweiten Spulen 14, ein zweiter Rotor 16, Magnete 23, insb. Permanentmagnete 23, und vorzugsweise ein Zahnrad/Antriebsrad 18 bzw. eine Antriebswelle 18.

Gemäß der Erfindung ist die (einstückige) Trägerplatte 12 bzw. Platine 29 mit den ersten Spulen 13 sowie den zweiten Spulen 14 sowie einer nicht näher dargestellten Kontrolleinheit zum Kontrollieren bzw. Steuern/Betreiben der beiden Motoren 24, 25 bestückt bzw. verlötet. Die Kontrolleinheit umfasst z.B. einen Chip bzw. Mikroprozessor oder elektr. Bauteile wie z.B. Widerstände, Kondensatoren oder dergleichen auf. Die Platine 29 ist bestückt bzw. umfasst auch bei den nachfolgenden Varianten der Erfindung die Kontrolleinheit.

Darüber hinaus weist die in Figur 2 dargestellte Variante eine (feststehende) Achse 20 und eine Hülse 19 auf, um die sich die Rotoren 15, 16 mit den Zahnrädern 17, 18 drehen. Die Hülse 19 definiert in vorteilhafter Weise den Abstand sowie die Lage/Ausrichtung der beiden Rotoren 15, 16 und bildet gemeinsam mit der Achse 20 die Gleit-/Lagerung der Rotoren 15, 16 (vgl. auch Figuren 3 bis 7). Die Achse 20 ist beispielsweise an einem Stellantriebsgehäuse oder dergleichen fest fixiert/positioniert, so dass die Drehachsen der beiden Rotoren 15, 16 bzw. Motoren 24, 25 exakt festgelegt/positioniert sind.

In den Figuren 2 bis 7 sind verschiedene Varianten der Stellantriebe 7 bzw. Elektromotoren 7 gemäß der Erfindung schematisch dargestellt. Hierbei ist jedoch im Unterschied zur Variante gemäß Figur 2 eine zur Platine 29 separate Trägerplatte 12 vorgesehen. Die Trägerplatte 12 ist in vorteilhafter Weise mit der Platine 29 fest verbunden bzw. verschraubt (ohne nähere Darstellung). Zudem sind diverse elektrische Verbindungen bzw. Kabel oder dergleichen zwischen der Trägerplatte 12 und der Platine 29 vorhanden, z.B. auf der Platine 29 verlötete Spulenenden der Spulen 13, 14.

Es weist der Stellantrieb 7 gemäß Figur 3 unterschiedliche erste Spulen 13 und zweite Spulen 14 auf, wobei diese einerseits in radialer Richtung versetzt zueinander angeordnet sind. Hiermit wird die gegenseitige elektromagnetische Beeinflussung der Spulen 13, 14 in vorteilhafter Weise reduziert.

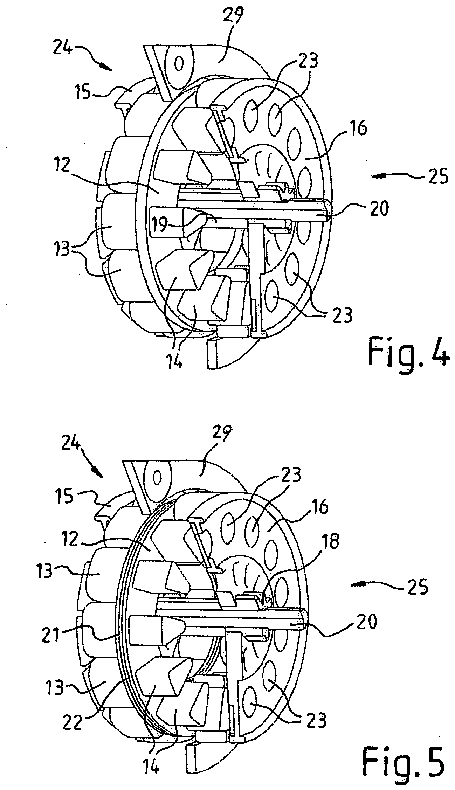

Andererseits sind die ersten Spulen 13 sowie die zweiten Spulen 14 gemäß Figur 3 unterschiedlich (groß) dimensioniert. Letzteres kann generell z.B. mit einer unterschiedlichen Anzahl an Wicklungen und/oder unterschiedlich starken/dicken Spulen- bzw. Kupferdrähten oder Spulen 13, 14 mit unterschiedlicher Länge und/oder Breite und/oder Höhe realisiert werden. So weist die Variante gemäß Figur 4 zwar gleich viele erste und zweite Spulen 13, 14 auf, z.B. jeweils 12 Stück. Jedoch sind die zweiten Spulen 14 deutlich kleiner dimensioniert als die ersten Spulen 13, insb. bzgl. der Breite bzw. Wicklungen/Drahtdurchmesser der jeweiligen Spulen 13, 14.

Es ist generell gemäß der Erfindung von Vorteil, die Spulen 13, 14 in vorteilhafter Weise in einem Kreisring anzuordnen. Grundsätzlich ist von Vorteil, die Spulen 13, 14 jeweils konzentrisch und/oder scheibenförmig auf einer Ebene bzw. der Platine 29 bzw. der Trägerplatte 12 anzuordnen.

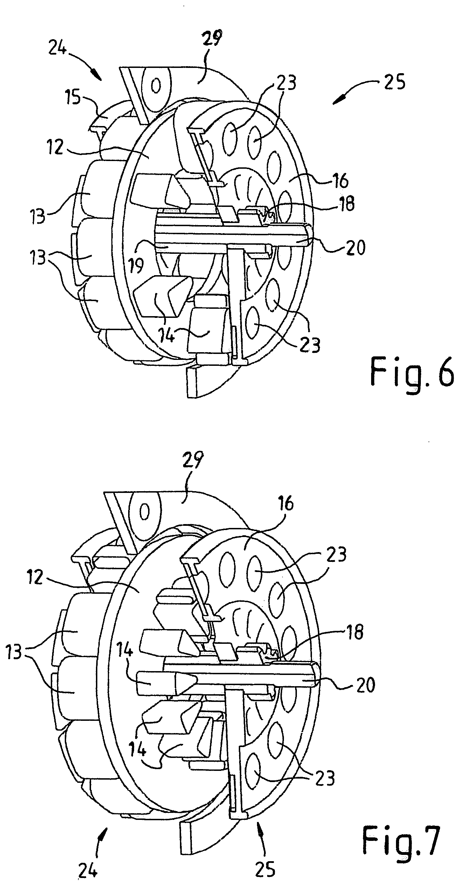

Die unterschiedlich (große) Dimensionierung der Motoren 24, 25 bzw. Statoren kann gemäß der Erfindung auch durch unterschiedliche Innen- und/oder Außendurchmesser des Kreisrings bzw. Spulenrings verwirklicht werden. So weist die Variante gemäß Figur 7 z.B. zweite Spule 14 auf, die einen Kreisring bilden, der einen deutlich kleineren Außendurchmesser aufweist als der Außendurchmesser des Kreisrings der ersten Spulen 13 auf der anderen Seite der Trägerplatte 12. Die Anzahl der Spulen ist in diesem Beispiel gleich, beispielsweise zwölf Stück je Seite.

Dagegen sind bei der Variante gemäß Figur 6 wiederum zwölf erste Spulen 13, jedoch nur sechs zweite Spulen 14 auf der anderen Seite der Trägerplatte 12 angeordnet. Dementsprechend unterschiedliche Motorparameter, z.B. Drehmoment, Drehzahl und/oder Drehgeschwindigkeit etc., werden hierdurch in vorteilhafter Weise realisiert. Auch kann hiermit eine gegenseitige Beeinflussung verringert bzw. eine gewisse Abschirmung der beiden Motoren 24, 25 verwirklicht werden.

Eine besonders vorteilhafte Reduktion der gegenseitigen Beeinflussung bzw. eine vorteilhafte Abschirmung zwischen den beiden Motoren 24, 25 kann mit der Variante gemäß Figur 5 verwirklicht werden. So kann die Trägerplatte 12 oder nicht näher dargestellt die Leiterplatte 12 bzw. Platine 12 gemäß Figur 2 schichtartig bzw. als Baueinheit mit z.B. zwei Abschirmelementen 21, 22 bzw. Metallschichten 21, 22 bzw. sog. Kurzschlussbleche 21, 22 ausgebildet werden.

### Bezugszeichenliste

- 1.: Motor
- 2.: Motorölkühler
- 3.: Getriebeölkühler
- 4.: Modul
- 5.: Pumpe
- 6.: Drehschieber
- 7.: Antrieb
- 8.: Abgaswärmetauscher
- 9.: Behälter
- 10.: Wärmetauscher
- 11.: Gehäuseelement
- 12.: Trägerplatte
- 13.: Spulen
- 14.: Spulen
- 15.: Rotor
- 16.: Rotor
- 17.: Zahnrad
- 18.: Zahnrad
- 19.: Hülse
- 20.: Achse
- 21.: Abschirmschicht
- 22.: Abschirmschicht
- 23.: Magnete
- 24.: Motor
- 25.: Motor
- 28.: Kühler/Wärmetauscher
- 29.: Leiterplatte/Platine
- 30.: Komponente

## Patentansprüche

1. Stellantrieb (7) für ein Stellorgan (6) zur Steuerung eines Fluides, insb. eines Kühlmittels eines Fahrzeugs, wobei wenigstens ein erster, elektrischer Antriebsmotor (24) zumindest eine erste, um eine erste Drehachse (20) drehbare Rotoreinheit (15) und eine erste, zumindest zwei erste Antriebsspulen (13) umfassende Statoreinheit aufweist, **dadurch gekennzeichnet, dass** eine elektrische und/oder elektronische Leiterplatte (29) wenigstens eine elektrische und/oder elektronische Kontrolleinheit zum Kontrollieren des ersten Antriebsmotors (24) umfasst, dass wenigstens auf einer ersten Seite einer Trägerplatte (12) zumindest die zwei ersten Antriebsspulen (13) der ersten Statoreinheit und auf einer zweiten, der ersten Seite der Trägerplatte (12) gegenüberliegend angeordneten, zweiten Seite der Trägerplatte (12) zumindest zwei zweite Antriebsspulen (14) einer zweiten Statoreinheit eines zweiten elektrischen Antriebsmotors (25) angeordnet sind, wobei der zweite elektrische Antriebsmotor (25) die zweite Statoreinheit und eine zweite Rotoreinheit (16) umfasst, und dass wenigstens eine erste Antriebswelle (17) des ersten elektrischen Antriebsmotors (24) wenigstens teilweise als erste Hohlwelle (17) und/oder wenigstens eine zweite Antriebswelle (18) des zweiten elektrischen Antriebsmotors (25) wenigstens teilweise als zweite Hohlwelle (18) ausgebildet ist/sind, wobei eine Antriebsachse (20) als Lagerelement (20) der ersten und/oder zweiten Hohlwelle (17, 18) ausgebildet ist, so dass die erste und/oder zweite Hohlwelle (17, 18) um die Antriebsachse (20) drehbar ist/sind.

2. Stellantrieb nach Anspruch 1, **dadurch gekennzeichnet, dass** die Leiterplatte (29) als die Trägerplatte (12) ausgebildet ist.

3. Stellantrieb nach einem der vorgenannten Ansprüche, **dadurch gekennzeichnet, dass** die erste Drehachse (20) der ersten Rotoreinheit (15) zugleich eine zweite Drehachse (20) der zweiten Rotoreinheit (16) ist, so dass der erste elektrische Antriebsmotor (24) konzentrisch zum zweiten elektrischen Antriebsmotor (25) angeordnet ist.

4. Stellantrieb nach einem der vorgenannten Ansprüche, **dadurch gekennzeichnet, dass** wenigstens eine Abschirmeinheit (21, 22) zum elektromagnetischen Abschirmen des/der ersten Antriebsmotors (24)/Statoreinheit von dem/der zweiten Antriebsmotor (25)/Statoreinheit vorgesehen ist.

5. Stellantrieb nach einem der vorgenannten Ansprüche, **dadurch gekennzeichnet, dass** die Leiterplatte (29) und/oder die Trägerplatte (12) wenigsten ein Abschirmelement (21, 22) der Abschirmeinheit (21, 22) umfasst.

6. Stellantrieb nach einem der vorgenannten Ansprüche, **dadurch gekennzeichnet, dass** die Anzahl der ersten Antriebsspulen (13) nicht gleich der Anzahl der zweiten Antriebsspulen (14) ist.

7. Stellantrieb nach einem der vorgenannten Ansprüche, **dadurch gekennzeichnet, dass** in radialer Richtung um die Drehachse (20) betrachtet die ersten Antriebsspulen (13) wenigstens teilweise versetzt zu den zweiten Antriebsspulen (14) angeordnet sind.

8. Stellantrieb nach einem der vorgenannten Ansprüche, **dadurch gekennzeichnet, dass** in radialer Richtung um die Drehachse (20) betrachtet die ersten Antriebsspulen (13) wenigstens in einem ersten Kreisbogensegment und die zweiten Antriebsspulen (14) in einem in Bezug auf das erste Kreissektor versetzt angeordneten, zweiten Kreisbogensegment angeordnet sind.

9. Stellantrieb nach einem der vorgenannten Ansprüche, **dadurch gekennzeichnet, dass** ein erster Abstand der ersten Antriebsspulen (13) in radialer Richtung zur Drehachse betrachtet nicht gleich einem zweiten Abstand der zweiten Antriebsspulen (14) ist.

10. Stellantrieb nach einem der vorgenannten Ansprüche, **dadurch gekennzeichnet, dass** ein erster, auf die erste Drehachse (20) bezogener Außendurchmesser der ersten Antriebsspulen (13) nicht gleich einem zweiten, auf die zweite Drehachse (20) bezogener Außendurchmesser der zweiten Antriebsspulen (14) ist.

11. Motortemperiereinheit (11), insb. Motorkühleinheit (11), zum Pumpen und/oder Verteilen eines flüssigen Wärmeträgers, insb. eines Kühlwassers, eines Motors (1) wie eines Elektromotors oder einer Verbrennungskraftmaschine (1), mit wenigstens einem Pumpengehäuseabschnitt (11) zum Aufnehmen eines Pumpenrades (5) und zum Umpumpen des Wärmeträgers und mit wenigstens einem Stellorgan (6) zur Steuerung des Wärmeträgers des Motors (1) insb. eines Fahrzeugs, wobei wenigstens ein Stellantrieb (7) zum Antreiben/Verstellen des Stellorgans (6) vorgesehen ist, **dadurch gekennzeichnet, dass** der Stellantrieb (7) nach einem der vorgenannten Ansprüche ausgebildet ist.

12. Motor (1), insb. Elektromotor, Verbrennungskraftmaschine (1) wie Benzinmotor (1) oder Dieselmotor (1), mit einer Motortemperiereinheit (11) nach dem vorgenannten Anspruch.

13. Fahrzeug, insbesondere Kraftfahrzeug, mit einem Motor (1) nach dem vorgenannten Anspruch.

## Claims

1. Actuating drive (7) for an actuating member (6) for controlling a fluid, in particular a coolant of a vehicle, wherein at least one first, electric drive motor (24) has at least one first rotor unit (15) that is rotatable about a first rotation axis (20) and one first stator unit that comprises at least two first drive coils (13), **characterized in that** an electrical and/or electronic printed circuit board (29) comprises at least one electrical and/or electronic control unit for controlling the first drive motor (24), **in that** the at least two first drive coils (13) of the first stator unit are arranged at least on a first side of a carrier plate (12) and at least two second drive coils (14) of a second stator unit of a second electric drive motor (25) are arranged on a second side of the carrier plate (12), which second side is arranged opposite the first side of the carrier plate (12), wherein the second electric drive motor (25) comprises the second stator unit and a second rotor unit (16), and **in that** at least one first drive shaft (17) of the first electric drive motor (24) is designed at least partially as a first hollow shaft (17) and/or at least one second drive shaft (18) of the second electric drive motor (25) is designed at least partially as a second hollow shaft (18), wherein a drive axle (20) is designed as a bearing element (20) of the first and/or the second hollow shaft (17, 18), so that the first and/or the second hollow shaft (17, 18) are/is rotatable about the drive axle (20).

2. Actuating drive according to Claim 1, **characterized in that** the printed circuit board (29) is designed as the carrier plate (12).

3. Actuating drive according to either of the preceding claims, **characterized in that** the first rotation axis (20) of the first rotor unit (15) is simultaneously a second rotation axis (20) of the second rotor unit (16), so that the first electric drive motor (24) is arranged concentrically with respect to the second electric drive motor (25).

4. Actuating drive according to one of the preceding claims, **characterized in that** at least one shielding unit (21, 22) is provided for electromagnetically shielding the first drive motor (24)/stator unit from the second drive motor (25)/stator unit.

5. Actuating drive according to one of the preceding claims, **characterized in that** the printed circuit board (29) and/or the carrier plate (12) comprise/comprises at least one shielding element (21, 22) of the shielding unit (21, 22).

6. Actuating drive according to one of the preceding claims, **characterized in that** the number of first drive coils (13) is not the same as the number of second drive coils (14).

7. Actuating drive according to one of the preceding claims, **characterized in that**, as seen in the radial direction about the rotation axis (20), the first drive coils (13) are arranged at least partially offset with respect to the second drive coils (14).

8. Actuating drive according to one of the preceding claims, **characterized in that**, as seen in the radial direction about the rotation axis (20), the first drive coils (13) are arranged at least in a first segment of an arc of a circle and the second drive coils (14) are arranged in a second segment of an arc of a circle, which second segment is arranged offset in relation to the first sector of the circle.

9. Actuating drive according to one of the preceding claims, **characterized in that** a first distance of the first drive coils (13), as seen in the radial direction with respect to the rotation axis, is not the same as a second distance of the second drive coils (14).

10. Actuating drive according to one of the preceding claims, **characterized in that** a first outside diameter, in relation to the first rotation axis (20), of the first drive coils (13) is not the same as a second outside diameter, in relation to the second rotation axis (20), of the second drive coils (14).

11. Motor temperature-control unit (11), in particular motor cooling unit (11), for pumping and/or distributing a liquid heat carrier, in particular cooling water, of a motor (1) such as an electric motor or an internal combustion engine (1), comprising at least one pump housing section (11) for accommodating a pump impeller (5) and for pumping the heat carrier in circulation and comprising at least one actuating member (6) for controlling the heat carrier of the motor (1) in particular of a vehicle, wherein at least one actuating drive (7) is provided for driving/adjusting the actuating member (6), **characterized in that** the actuating drive (7) is designed according to one of the preceding claims.

12. Motor (1), in particular electric motor, internal combustion engine (1) such as petrol engine (1) or diesel engine (1), comprising a motor temperature-control unit (11) according to the preceding claim.

13. Vehicle, in particular motor vehicle, comprising a motor (1) according to the preceding claim.

## Revendications

1. Servomoteur (7) pour un organe de réglage (6) permettant de commander un fluide, en particulier un produit réfrigérant d'un véhicule, dans lequel au moins un premier moteur d'entraînement électrique (24) présente au moins une première unité de rotor (15) pouvant tourner autour d'un premier axe de rotation (20) et une première unité de stator comprenant au moins deux premières bobines d'excitation (13),
**caractérisé en ce qu'**une carte de circuits imprimés (29) électrique et/ou électronique comprend au moins une unité de contrôle électrique et/ou électronique pour contrôler le premier moteur d'entraînement (24), **en ce qu'**au moins sur une première face d'une plaque de support (12), au moins les deux premières bobines d'excitation (13) de la première unité de stator sont disposées, et sur une deuxième face de la plaque de support (12), lequel deuxième face étant opposée à la première face de la plaque de support (12), au moins deux deuxièmes bobines d'excitation (14) d'une deuxième unité de stator d'un deuxième moteur d'entraînement électrique (25) sont disposées, le deuxième moteur d'entraînement électrique (25) comprenant la deuxième unité de stator et une deuxième unité de rotor (16), et **en ce qu'**au moins un premier arbre d'entraînement (17) du premier moteur d'entraînement électrique (24) est réalisé au moins partiellement sous la forme d'un premier arbre creux (17) et/ou au moins un deuxième arbre d'entraînement (18) du deuxième moteur d'entraînement électrique (25) est réalisé au moins partiellement sous la forme d'un deuxième arbre creux (18), un arbre moteur (20) étant réalisé sous la forme d'un élément porteur (20) du premier et/ou du deuxième arbre creux (17, 18) de sorte que le premier et/ou le deuxième arbre creux (17, 18) peut/peuvent tourner autour de l'arbre moteur (20).

2. Servomoteur selon la revendication 1, **caractérisé en ce que** la carte de circuits imprimés (29) est réalisée sous la forme de la plaque de support (12).

3. Servomoteur selon l'une quelconque des revendications précédentes, **caractérisé en ce que** le premier axe de rotation (20) de la première unité de rotor (15) est en même temps un deuxième axe de rotation (20) de la deuxième unité de rotor (16) de sorte que le premier moteur d'entraînement électrique (24) est disposé de manière concentrique par rapport au deuxième moteur d'entraînement électrique (25).

4. Servomoteur selon l'une quelconque des revendications précédentes, **caractérisé en ce qu'**au moins une unité de blindage (21, 22) pour le blindage électromagnétique du premier moteur d'entraînement (24)/ de la première unité de stator par rapport au deuxième moteur d'entraînement (25)/ à la deuxième unité de stator est prévue.

5. Servomoteur selon l'une quelconque des revendications précédentes, **caractérisé en ce que** la carte de circuits imprimés (29) et/ou la plaque de support (12) comprend/comprennent au moins un élément de blindage (21, 22) de l'unité de blindage (21, 22).

6. Servomoteur selon l'une quelconque des revendications précédentes, **caractérisé en ce que** le nombre des premières bobines d'excitation (13) n'est pas égal au nombre des deuxièmes bobines d'excitation (14).

7. Servomoteur selon l'une quelconque des revendications précédentes, **caractérisé en ce que**, vu dans la direction radiale autour de l'axe de rotation (20), les premières bobines d'excitation (13) sont disposées de manière au moins partiellement décalée par rapport aux deuxièmes bobines d'excitation (14).

8. Servomoteur selon l'une quelconque des revendications précédentes, **caractérisé en ce que**, vu dans la direction radiale autour de l'axe de rotation (20), les premières bobines d'excitation (13) sont disposées au moins dans un premier segment d'arc de cercle, et les deuxièmes bobines d'excitation (14) sont disposées dans un deuxième segment d'arc de cercle disposé de manière décalée par rapport au premier arc de cercle.

9. Servomoteur selon l'une quelconque des revendications précédentes, **caractérisé en ce qu'**un premier espacement des premières bobines d'excitation (13), vu dans la direction radiale par rapport à l'axe de rotation, n'est pas égal à un deuxième espacement des deuxièmes bobines d'excitation (14).

10. Servomoteur selon l'une quelconque des revendications précédentes, **caractérisé en ce qu'**un premier diamètre extérieur, relatif au premier axe de rotation (20), des premières bobines d'excitation (13) n'est pas égal à un deuxième diamètre extérieur, relatif au deuxième axe de rotation (20), des deuxièmes bobines d'excitation (14).

11. Unité de régulation de température de moteur (11), en particulier unité de refroidissement de moteur (11), permettant de pomper et/ou de distribuer un fluide caloporteur liquide, en particulier de l'eau de refroidissement, d'un moteur (1), tel qu'un moteur électrique ou un moteur à combustion interne (1), comprenant au moins une partie de carter de pompe (11) permettant de recevoir une roue de pompe (5) et de transvaser le fluide caloporteur, et comprenant au moins un organe de réglage (6) permettant de commander le fluide caloporteur du moteur (1), en particulier d'un véhicule, au moins un servomoteur (7) étant prévu pour entraîner/ajuster l'organe de réglage (6),
**caractérisée en ce que** le servomoteur (7) est réalisé selon l'une quelconque des revendications précédentes.

12. Moteur (1), en particulier moteur électrique, moteur à combustion interne (1), tel qu'un moteur à essence (1) ou un moteur diesel (1), comprenant une unité de régulation de température de moteur (11) selon la revendication précédente.

13. Véhicule, en particulier véhicule automobile, comprenant un moteur (1) selon la revendication précédente.
